# EUROPEAN PATENT SPECIFICATION

(11) **EP 4 187 146 B1**
(45) Date of publication and mention of the grant of the patent: **19.03.2025**
(21) Application number: 21210876.5
(22) Date of filing: 26.11.2021
(51) Int. Cl.: F21S 43/14, F21S 43/20, F21S 43/27, F21S 43/31, F21S 43/40, F21S 43/50, B60Q 1/26, B60R 13/00, G09F 13/04, G09F 21/04, B60Q 1/00, B60Q 1/30, B60Q 1/50

(54) **AUTOMOTIVE LIGHTING APPARATUS AND AUTOMOTIVE LIGHT PROVIDED WITH SUCH AN APPARATUS**
KFZ-BELEUCHTUNGSVORRICHTUNG UND KFZ-BELEUCHTUNG MIT EINER SOLCHEN VORRICHTUNG
APPAREIL D'ÉCLAIRAGE AUTOMOBILE ET ÉCLAIRAGE DE VÉHICULE AUTOMOBILE POURVU D'UN TEL APPAREIL

(43) Date of publication of application: 31.05.2023
(73) Proprietor: Marelli Automotive Lighting Italy S.p.A. Con Socio Unico, 10078 Venaria Reale (TO) (IT)
(72) Inventor: FADI, Denis, 33028 TOLMEZZO (UD) (IT)
(74) Representative: Novagraaf Group

(56) References cited:
- EP-A2- 1 688 308
- DE-A1- 102014 212 918
- DE-A1- 102015 100 473
- DE-A1- 102017 113 662
- US-A1- 2014 160 779
- US-A1- 2015 197 180
- US-B1- 9 616 823

## Description

The present invention relates to an automotive lighting apparatus and an automotive light.

In more detail, the present invention relates to a lighting apparatus for motor vehicles, which is adapted to be located in the front or rear part of a car or similar vehicle, and is able to make visible, at night, the symbol, logo, acronym and/or trademark that is usually located in the front or rear part of the vehicle, and usually unambiguously identifies the car model and/or the car manufacturer of the car model itself. Use to which the following disclosure will make explicit reference without however losing generality.

As is known, a headlight or taillight for cars and similar motor vehicles is, conventionally, a lighting device that is placed at the front or rear of the vehicle and has the function of illuminating the area around the vehicle and/or the function of signalling the position of the vehicle, the sudden deceleration of the vehicle and/or the turning direction of the vehicle, in accordance with certain photometric approval standards.

In recent years, many car manufacturers have chosen to equip their new car models with headlights and/or taillights that, in addition to their traditional signalling functions, are also characterised by special shapes and/or are able to produce light effects which allow the car model on which the lights are mounted to be unambiguously identified.

In other words, the shapes and light effects produced by the headlight or taillight are used to give the car fitted with this light greater visibility and distinctiveness at night.

In order to make their car models even more recognisable at night, some car manufacturers and their automotive lighting suppliers have recently started to develop supplementary lighting apparatuses, which are able to produce a luminous version of the car manufacturer's symbol, logo and/or trademark, usually located on the front or rear part of the vehicle.

Some of these supplementary lighting apparatuses are made up of: a rigid rear body, which has a substantially basin-shaped structure and is adapted to be fixed on the front or rear part of the bodywork of the vehicle; a front half-shell which is placed to close the mouth of the rear body and is centrally provided with a large transparent sector on which the identifying symbol, logo and/or trademark of the car manufacturer is located; a series of high power LEDs (acronym of Light Emitting Diode) which are located on the bottom of the rear body and direct the light towards the front half-shell; and a series of light-guide section-bars, which are made of photoconductive material, copy the shape of the identifying symbol, logo and/or trademark of the car manufacturer, and are interposed between some LEDs on the bottom of the rear body and the front half-shell, so as to direct the light emitted by those LEDs towards the area of the front half-shell where the symbol, logo and/or trademark identifying the car manufacturer is located.

In this way, the area of the front half-shell where the car manufacturer's identifying symbol, logo and/or trademark is located is backlighted differently from the rest of the front half-shell.

Patent US9616823 B1 discloses a lighting apparatus of this type.

Unfortunately, the lighting apparatus disclosed in patent US9616823 B1 was set aside by a number of car manufacturers, because the contrast between the identifying symbol, initials, logo and/or trademark of the car manufacturer and the surrounding background is poor and does not meet the stylistic requirements of the car manufacturers.

In fact, due to diffused backlighting, the edges of the symbol, acronym, logo and/or trademark are not clearly identifiable from a long distance, with the limitations that this entails.

In addition, the lighting apparatus described in patent US9616823 B1 uses a very large number of LEDs, and is therefore rather expensive to produce, as well as having serious overheating problems.

Finally, the lighting apparatus described in patent US9616823 B1 does not fit with the rest of the car's lights, and is therefore aesthetically unattractive.

Aim of the present invention is to provide a supplementary lighting apparatus which is simple and inexpensive to produce, and which is also capable of generating, around the identifying symbol, logo and/or trademark of the car manufacturer, new lighting effects that meet the latest requirements of car manufacturers.

In accordance with these aims, according to the present invention there is provided an automotive lighting apparatus as defined in Claim 1 and preferably, though not necessarily, in any one of the claims depending on it.

According to the present invention there is also provided an automotive light as defined in Claim 16 and preferably, though not necessarily, in any one of the Claims depending on it.

The present invention will now be described with reference to the attached drawings, which shows a nonlimiting embodiment thereof, in which:
- Figure 1 is a perspective view, with parts in section and parts removed for clarity's sake, of an automotive light incorporating a supplementary lighting apparatus realized in accordance with the teachings of the present invention;
- Figure 2 is an enlarged perspective view of the portion of the automotive light of Figure 1 incorporating the supplementary lighting apparatus;
- Figure 3 is a cross-sectional view of the portion of the automotive light shown in Figures 1 and 2 where the supplementary lighting apparatus is located, with parts removed for clarity's sake;
- Figure 4 is an exploded perspective view of the supplementary lighting apparatus shown in the preceding Figures, with parts removed for clarity's sake;
- Figure 5 is a perspective view of the supplementary lighting apparatus shown in the preceding Figures, sectioned along the transversal plane and with parts removed for clarity's sake;
- Figure 6 is a perspective view of a second embodiment of the supplementary lighting apparatus shown in Figures 1 to 5, with parts in section and parts removed for clarity's sake;
- Figure 7 is a perspective view of a third embodiment of the supplementary lighting apparatus shown in Figures 1 to 5, with parts in section and parts removed for clarity's sake; whereas
- Figure 8 is a cross-sectional view of the portion of the automotive light shown in Figures 1 and 2 where the supplementary lighting apparatus shown in Figure 7 is located, with parts removed for clarity's sake.

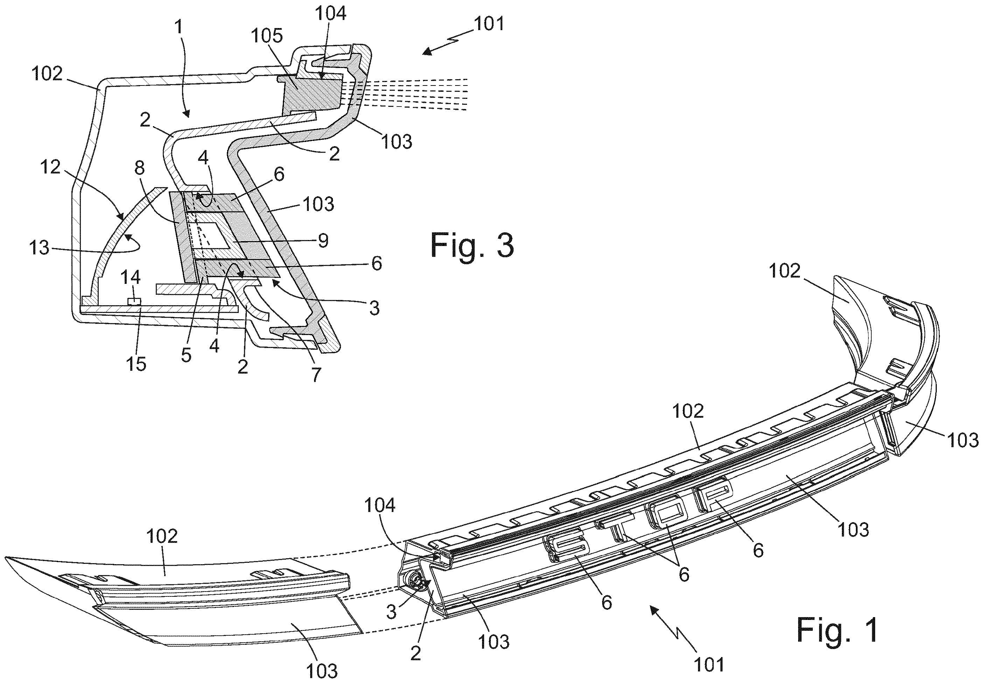

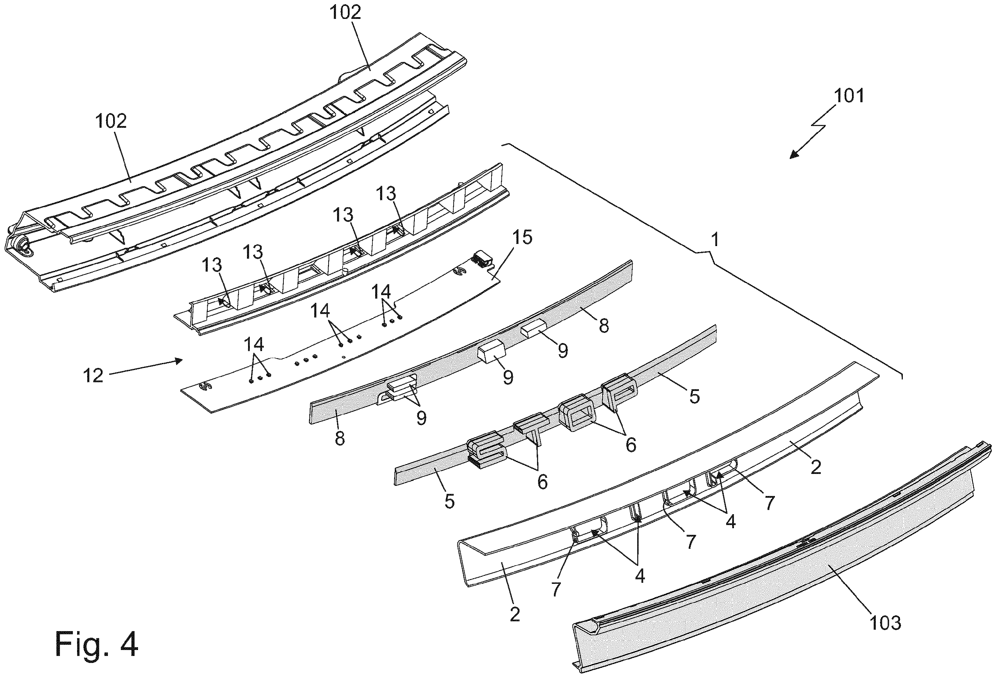

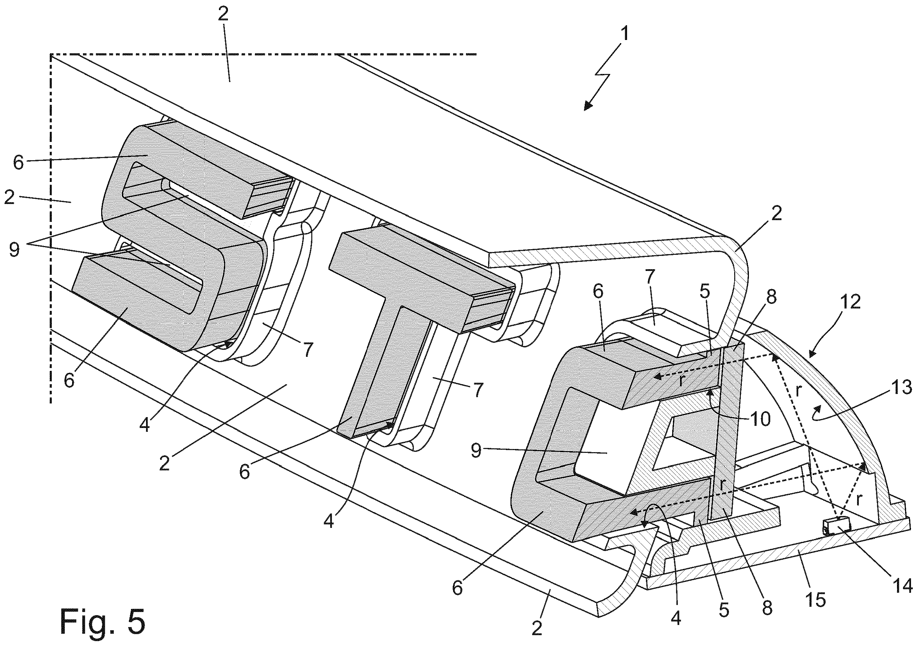

With reference to Figures 1 to 5, number 1 denotes as a whole an automotive light capable of producing one or more luminous graphic signs easily visible at night, i.e. a lighting apparatus which is specifically structured for being mounted on any car or other similar motor vehicle, and is capable of creating one or more luminous graphic signs easily visible at night.

Preferably said luminous graphic sign or signs moreover represent the identifying symbol, logo, initials and/or trademark that is traditionally located at the front or rear of the vehicle, to unambiguously identify the vehicle model and/or the manufacturer of the vehicle itself.

Additionally, the lighting apparatus 1 is furthermore particularly adapted to be incorporated in an automotive light 101, i.e. a lighting device adapted to be located on the front or rear part of the bodywork of a motor vehicle, with the function of emitting light signals adapted to signal the position of the vehicle and/or the sudden deceleration of the vehicle and/or the turning direction of the vehicle during travel.

In other words, the lighting apparatus 1 is particularly adapted to be incorporated in a headlight or taillight for cars, vans, trucks, motorbikes or other similar motor vehicles.

Clearly, the lighting apparatus 1 could also be incorporated in an automotive light adapted to be placed on a side of the car or similar vehicle.

In the illustrated example, in particular, the lighting apparatus 1 is preferably incorporated in a taillight 101 for cars and similar vehicles, i.e. an automotive light which is specifically structured for being stably recessed on the rear part of the bodywork of the vehicle (not shown), and has the function of emitting light signals adapted to signal the position of the vehicle and/or the sudden deceleration of the vehicle and/or the turning direction of the vehicle during travel.

Obviously, in a different embodiment, the taillight 101 could also be simply fixed cantilevered on the rear part of the bodywork of the vehicle (not shown).

With reference to Figures 1, 2 and 3, the automotive light 101, in particular, is preferably oblong in shape, and comprises: a substantially rigid and preferably made of opaque material, rear body 102 which is substantially basin-shaped, and is structured so as to be firmly fixed to the vehicle bodywork (not shown); and a substantially rigid, front half-shell 103, traditionally called lens, which is arranged to close the mouth of rear body 102, preferably watertight and preferably so as to surface outside of the vehicle bodywork, and is provided with one or more transparent or semi-transparent sectors, optionally also coloured.

In more detail, the rear body 102 is preferably made of plastic material, advantageously via an injection moulding process, and is preferably structured so as to be at least partially recessed into a seat specially made in the rear part of the vehicle bodywork (not shown).

Obviously, in a different embodiment, the rear body 102 may also be structured so as to be at least partially recessed into a seat specially made in the front part of the vehicle bodywork (not shown), or so as to be simply fixed cantilevered on the front or rear part of the vehicle bodywork.

Similarly, the front half-shell 103 is preferably made of a transparent or semi-transparent plastic material, such as for example polycarbonate (PC) or polymethyl methacrylate (PMMA), advantageously via an injection moulding process.

Furthermore, in the illustrated example the front half shell 103 is preferably provided with a plurality of adjacent transparent or semi-transparent sectors.

With reference to Figures 1, 2 and 3, in addition, the automotive light 101 also comprises one or more electrically-powered lighting assemblies 104, each of which emits light on command and is placed inside the rear body 102, underneath a corresponding transparent or semi-transparent sector of front half-shell 103, so as to be able to selectively backlight the same transparent or semi-transparent sector of the half-shell, preferably separately and independently from the other lighting assemblies 104.

Preferably, the or at least one of the lighting assemblies 104 is furthermore structured so as to direct the light towards the corresponding and facing transparent or semi-transparent sector of front half-shell 103, with a prevailing component of the light beam substantially parallel to a predetermined reference optical axis, which is preferably substantially parallel to the vehicle longitudinal axis when the automotive light 101 is correctly mounted/placed on the vehicle bodywork.

In other words, most of the light rays that form the light beam coming out of the lighting assembly 104 is substantially parallel to the reference optical axis of the lighting assembly.

In the illustrated example, in particular, one of the lighting assemblies 104 preferably comprises: a light-guide bar 105 that extends immediately underneath the front half shell 103, preferably substantially grazing one of the major lateral edges of the rear body 102; and a pair of high-power LEDs (not shown in the figures) that are located within the rear body 102, each facing a respective end of the light-guide bar 105 so as to direct the light produced towards the same end.

This light then propagates inside the body of the light-guide bar 105 by total internal reflection, and comes out in known manner from the front side of the light-guide bar 105, i.e. from the side of the light-guide bar 105 directly facing the front half-shell 103, so that a corresponding ribbon-like sector of the front half-shell 103 can be backlighted.

With reference to Figures 1 to 5, the lighting apparatus 1 is preferably located inside the rear body 102, beneath a corresponding transparent sector of the front half-shell 103, and is capable of backlighting, on command, the same transparent sector of the half-shell.

In addition, the lighting apparatus 1 is preferably placed/located in the central segment of the automotive light 101.

In more detail, the lighting apparatus 1 is preferably oblong in shape, and is preferably located within the rear body 102 substantially straddling the midplane M of the automotive light 101.

The lighting apparatus 1 moreover comprises: an opaque mask 2 with a substantially rigid and/or plate-like structure, which is located spaced beneath the front half-shell 103 so as to form, with the latter, an empty gap 3, and is provided with one or more pass-through openings 4 whose overall shape copies the shape of the outer perimeter edge of the luminous graphic sign or signs to be realized; and a first bearing plate 5 with a substantially rigid and transparent structure, which is arranged flush to the rear face of the opaque mask 2, and directly supports one or more protruding transparent plugs 6 that overall copy the shape of the luminous graphic sign or signs to be realized, and protrude cantilevered inside the gap 3 engaging the one or more pass-through openings 4 of the opaque mask 2.

In other words, the transparent protruding plug or plugs 6 protrude cantilevered from the front face of the bearing plate 5, engage the various pass-through openings 4 of the opaque mask 2, and finally extend cantilevered inside the gap 3, preferably up to arrive close to the front half-shell 103.

In more detail, the opaque mask 2 is preferably provided with a substantially flat central sector, and the through opening or openings 4 are preferably located within this central sector.

Preferably, the opaque mask 2 is also oblong in shape and contributes to delimiting, behind the front half-shell 103, an oblong-shaped gap 3.

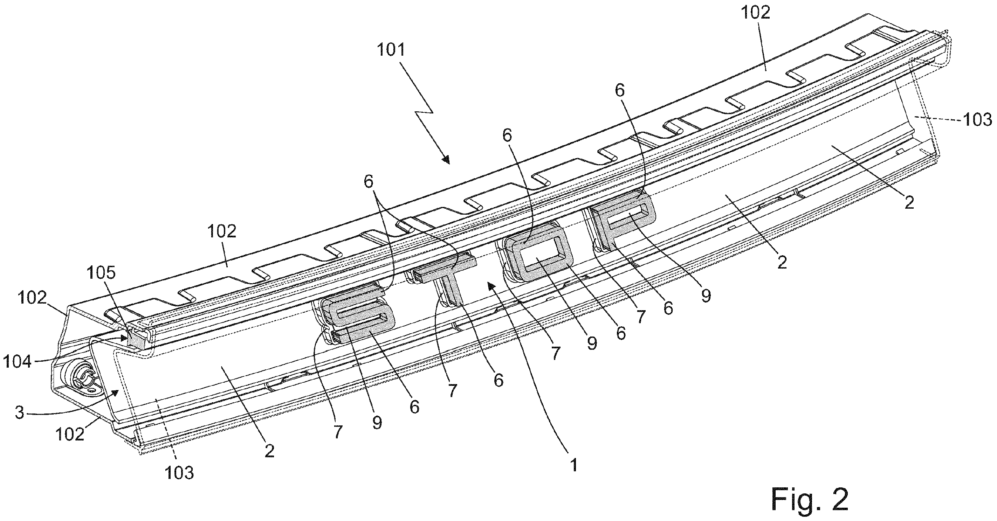

With particular reference to Figures 2, 3 and 5, preferably the opaque mask 2 moreover has, along the perimeter edge of at least one and more conveniently each pass-through opening 4, a respective protruding collar 7 that extends cantilevered towards the front half-shell 103, preferably seamlessly along the entire perimeter of the same pass-through opening 4.

Therefore the bearing plate 5 is preferably arranged adjacent to the central sector of the opaque mask 2, on the opposite side to the protruding collars 7.

Preferably, the transparent protruding plug or plugs 6 are moreover dimensioned so as to jut cantilevered into the gap 3, beyond the top of the corresponding protruding collars 7.

In addition, the opaque mask 2 preferably has a monolithic structure and is preferably made of opaque plastic material, advantageously via injection moulding.

The bearing plate 5, in turn, preferably has a monolithic structure and is preferably made of transparent plastic material, advantageously via injection moulding.

More specifically, the bearing plate 5 is preferably made of polycarbonate (PC) or polymethyl-methacrylate (PMMA).

In addition, similarly to opaque mask 2, the bearing plate 5 is preferably oblong in shape.

In the illustrated example, in particular, the bearing plate 5 is preferably substantially ribbon-like and its lying plane is preferably inclined by a few tens of degrees with respect to the lying plane of the central flat sector of opaque mask 2.

With reference to Figures 1 to 5, the or each transparent protruding plug 6, on the other hand, is preferably shaped substantially like a straight section-bar with a constant cross-section, and preferably extends cantilevered from the bearing plate 5 while remaining locally substantially perpendicular to the front face of the latter.

Furthermore, similarly to bearing plate 5, the or each transparent protruding plug 6 preferably also has a monolithic structure and is preferably made of transparent plastic material, advantageously via injection moulding.

More specifically, the one or each transparent protruding plug 6 is preferably made in one piece with the bearing plate 5.

With reference to Figures 2, 3, 4 and 5, the lighting apparatus 1 moreover also comprises a second bearing plate 8 with a substantially rigid and transparent structure, which is arranged flush and abutting on the rear face of bearing plate 5, and directly supports one or more opaque protruding plugs 9 which substantially copy the shape of the empty space or spaces present inside the luminous graphic sign or signs to be realized, and protrude cantilevered from the bearing plate 8 up to reach the gap 3, engaging specific complementary-shaped pass-through openings 10 specifically made in bearing plate 5.

The pass-through opening(s) 10 are also aligned with the pass-through opening(s) 4 of opaque mask 2, and the opaque protruding plugs 9 have a shape substantially complementary to the transparent protruding plug or plugs 6, so as to reach and fit stably within a single transparent protruding plug 6, or between two or more adjacent transparent protruding plugs 6.

Preferably, the lighting apparatus 1 is moreover provided with one or more protruding pins or other mechanical centring means (not shown in the figures) that advantageously stick out cantilevered from the opaque mask 2 and cooperate with corresponding holes or other mechanical centring means in the bearing plate 5 and/or in the bearing plate 8, so as to align the opaque protruding plugs 9 to the transparent protruding plugs 6 and/or the pass-through openings 4.

With reference to Figures 2, 3, 4 and 5, furthermore the or each transparent protruding plug 9 is preferably shaped substantially like a straight section-bar with a constant cross-section, and preferably extends cantilevered from the bearing plate 8 while remaining locally substantially perpendicular to the front face of the latter.

In addition, the one or more opaque protruding plug(s) 9 are preferably also dimensioned so as to jut cantilevered inside the gap 3 delimited by the opaque mask 2 and by the front half shell 103, up to the height of the top of the protruding collars 7.

Preferably, the bearing plate 8 moreover substantially copies the shape of bearing plate 5 and is arranged abutting on the bearing plate 5 so as to form a sandwich structure that, in turn, is arranged adjacent to the rear face of the opaque mask 2.

In other words, also the bearing plate 8 is preferably substantially ribbon-like.

Furthermore, similarly to bearing plate 5, also the bearing plate 8 preferably has a monolithic structure and is preferably made of transparent plastic material, advantageously via injection moulding.

More specifically, similarly to bearing plate 5, also the bearing plate 8 is preferably made of polycarbonate (PC) or polymethyl-methacrylate (PMMA).

Each opaque protruding plug 9, in turn, preferably has a monolithic structure and is preferably made of opaque plastic material, advantageously via injection moulding.

Preferably the or each opaque projecting plug 9 is moreover made by overmoulding directly onto the bearing plate 8. In other words, the opaque protruding plug or plugs 9 and the bearing plate 8 preferably form a monolithic structure.

With reference to Figures 3, 4 and 5, the lighting apparatus 1 moreover also comprises an electrically-powered lighting assembly 12, which is located behind the bearing plate 8, and thus adjacent to the bottom of the rear body 102, and is capable, on command, of emitting and directing, towards the rear face of bearing plate 8, a light beam that passes in sequence through the bearing plates 5 and 8, and then propagates inside the body of the or each transparent protruding plug 6 by total internal reflection, freely coming out from the front face of the or each protruding plug 6.

In other words, the or each projecting plug 6 works as a light-guide body and channels the light coming from the bearing plate 5 towards the front end of the same plug, via total internal reflection.

The light-emitting surface of the or each projecting plug 6 thus defines the shape/outline of the luminous graphic sign to be made, or of part thereof.

Preferably, the lighting assembly 12 moreover comprises: at least one and more conveniently a plurality of deflector bodies 13 that are located one beside the other, behind the bearing plate 8, and are provided with a concave surface capable of reflecting incident light towards the rear face of bearing plate 8; and a series of LEDs 14 (acronym for Light Emitting Diode) preferably of the high-power type, which are located at the side of the deflector body or bodies 13 and are oriented so as to direct the emitted light towards the concave surface of the immediately adjacent deflector body 13.

Clearly, the or each deflector body 13 is shaped and oriented so as to reflect, towards the rear face of the bearing plate 8, the light rays r emitted by the LED(s) 14 facing its concave surface.

In the illustrated example, in particular, the bearing plate 8 is preferably longitudinally divided into a series of adjacent sectors, each of which is aligned with at least one transparent plug 6 of bearing plate 5, and the lighting assembly 12 preferably comprises a series of deflector bodies 13 that are arranged one adjacent to the other, each facing a respective sector of the bearing plate 8.

In addition, the LED or LEDs 14 associated to each deflector body 13 may be switched on and/or off separately and independently of the other LEDs 14 of lighting assembly 12. In this way, each sector of bearing plate 8 can be backlighted separately from the others.

Preferably the deflector body or bodies 13 are moreover opaque and/or made of plastic material, advantageously via an injection moulding process, and preferably have a metallised mirror-finished, concave surface .

Furthermore, the deflector bodies 13 are preferably also incorporated in a single moulded piece with a monolithic oblong structure, which is suitable for being arranged in abutment on the rear face of bearing plate 8.

The LEDs 14, on the other hand, are preferably fixed side by side to one another, on a preferably oblong-shaped, printed circuit board 15 that is located behind the bearing plate 8, and is substantially orthogonal to the bearing plates 5 and 8. Preferably, the deflector bodies 13 are moreover arranged in abutment simultaneously on the rear face of bearing plate 8 and on the printed circuit board 15.

In addition, the LEDs 14 are preferably also divided, on the printed circuit board 15, into small groups each of which is aligned to a respective deflector body 13.

General operation of the automotive light 101 is similar to that of any other headlight or taillight for cars and the like, and therefore won't be further described.

As regards, in turn, the operation of automotive lighting apparatus 1, the transparent protruding plug or plugs 6, jutting within the gap 3 delimited by the opaque mask 2 and the front half-shell 103, are able to form, when the lighting assembly 12 is active, one or more luminous graphic signs that have a three-dimensional appearance and seem to float behind the front half shell 103.

The advantages connected to the special structure of the automotive lighting apparatus 1 are remarkable and numerous.

Firstly, the special structure of lighting apparatus 1 allows to realize luminous graphic sign or signs with a three-dimensional appearance.

Moreover, the combination of the opaque mask 2 and the opaque protruding plug or plugs 9 makes it possible to realize luminous graphic sign or sings with well-defined and contrasting edges, thus making the luminous graphic sign or signs easily distinguishable even from a long distance.

In addition, the arrangement of transparent protruding plugs 6 and opaque protruding plugs 9 on two bearing plates that are arranged flush and abutting one another, i.e. the bearing plates 5 and 8, simplifies and speeds up the assembly of lighting apparatus 1, thereby significantly reducing the costs thereof.

Last but not least, the automotive lighting apparatus 1 uses a small number of LEDs and is therefore particularly cost-effective to produce.

It is finally clear that modifications and variations may be made to the lighting apparatus 1 and to the automotive light 101 described above without however departing from the scope of the present invention, the scope of the invention being defined by the appended claims.

For example, the bearing plate 8 may have a different colour from the bearing plate 5 and/or the transparent protruding plugs 6, so as to change the colour of the illuminated graphic sign(s) when the lighting assembly 12 is activated.

Moreover, in a more sophisticated embodiment, the electrically-powered lighting assembly 12 may be structured so as to backlight certain sectors of bearing plate 8 completely separately and independently from the rest of the bearing plate 8, so that the light is propagated by total internal reflection only within a subgroup of transparent protruding plugs 6.

In more detail, one or more deflector bodies 13 of the lighting assembly 12 may be aligned only to the transparent protruding plugs 6 to be backlighted separately from the rest of the transparent protruding plugs 6, and the LEDs 14 associated to such deflector bodies 13 may be activated separately from the rest of the LEDs 14 located on the printed circuit board 15.

In a more sophisticated non-shown embodiment, in addition, the bearing plate 5 and the opaque mask 2 form a single body.

In other words, the bearing plate 5 is connected seamlessly with the opaque mask 2 and is preferably located behind the latter.

More specifically, the opaque mask 2 can be made directly on the bearing plate 5 preferably via overmoulding or bimaterial co-moulding.

Alternatively, the opaque mask 2 may consist of a layer of opaque paint applied to the front or rear face of the bearing plate 5. Clearly, the opaque paint finish won't be applied at the through opening or openings 4 to which the transparent protruding plug(s) 6 are aligned.

Furthermore, in a different embodiment of the lighting assembly 12, the deflector body or bodies 13 may be replaced by one or more light-guide body or bodies, which are made of photoconductive material and are shaped/structured so as to direct the light emitted by the LED(s) 14 towards the rear face of the bearing plate 8 by means of total internal reflection.

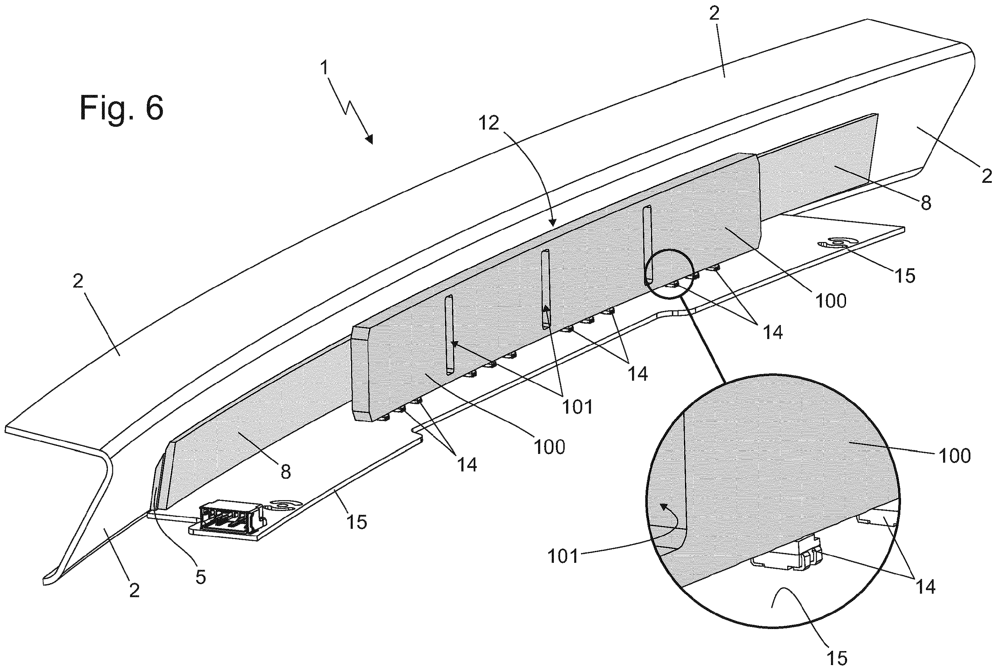

In more detail, with reference to Figure 6, the deflector bodies 13 of lighting assembly 12 may be replaced by a large light-guide plate 100 made of photoconductive material, substantially flat and preferably substantially rectangular in shape, which is arranged behind the bearing plate 8, substantially flush with the rear face of bearing plate 8, and has one of its sidewalls flush with the row of LEDs 14, so that the light emitted by the LEDs 14 can enter into the light-guide plate 100 through the sidewall and can then propagate into the body of the light-guide plate by total internal reflection.

In addition, the light-guide plate 100 has a front or rear face suitably structured to deflect, in a controlled and progressive manner towards the adjacent bearing plate 8, the light rays propagating into its body.

In the illustrated example, in particular, the light-guide plate 100 is preferably made of polycarbonate (PC), polymethyl methacrylate (PMMA) or another transparent plastic material, and is preferably arranged substantially perpendicular to the printed circuit board 15 supporting the LEDs 14.

In addition, the rear face of light-guide plate 100 is preferably provided with a myriad of small prisms, lenticular recesses or other light-extracting structures (not visible in the Figures), which are shaped so as to deflect the incident light towards the front face of the same plate, at an incidence angle such that the light rays can freely come out from the light-guide plate 100 and reach the rear face of bearing plate 8.

Finally, in the illustrated example, the light-guide plate 100 is preferably also provided with a series of substantially straight, transversal slots 101 that extend into the body of the plate preferably, but not necessarily, in a pass-through manner, and subdivide the same light-guide plate 100 into a series of adjacent sectors, each of which is preferably aligned to a corresponding sector of bearing plate 8 and can only direct light towards that sector.

Preferably, each sector of light-guide plate 100 moreover receives light from a limited group of LEDs 14, so as to backlight only the facing sector of the bearing plate 8.

Clearly, instead of being located along a single sidewall of light-guide plate 100, the LEDs 14 of lighting assembly 12 may be divided into two groups arranged on opposite sides of light-guide plate 100, each facing a respective sidewall of the plate. Therefore, in this case, the light produced by the LEDs 14 enters within the light-guide plate 100 from two opposite sides thereof.

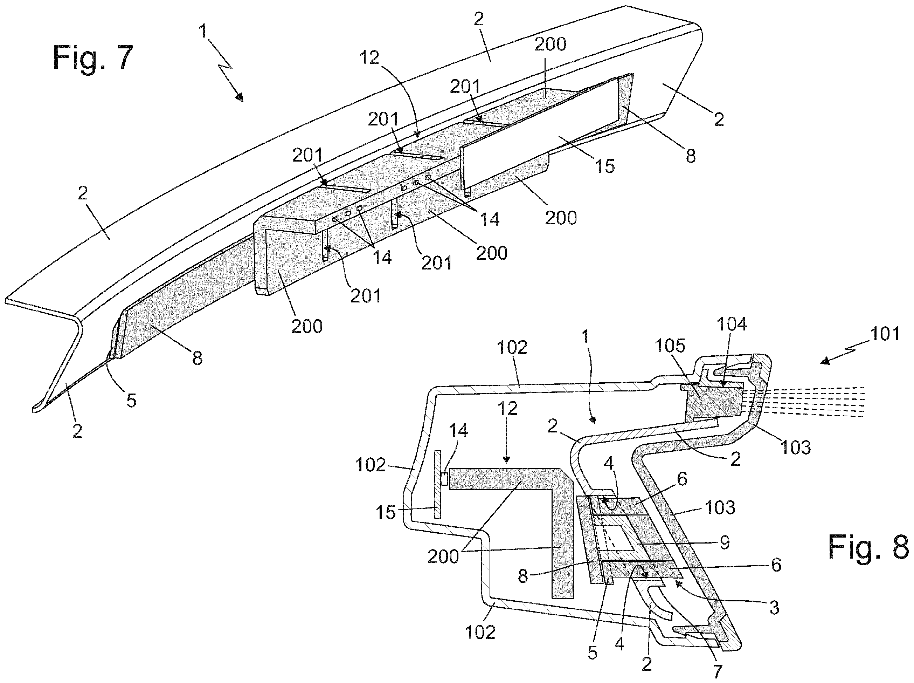

With reference to Figures 7 and 8, on the other hand, the deflector bodies 13 of lighting assembly 12 may be replaced by a large light-guide plate 20 made of photoconductive material, preferably substantially rectangular in shape, which is L-bent and is arranged behind the bearing plate 8, with the front segment substantially flush with the rear face of bearing plate 8 and with the rear segment instead moving away from the bearing plate 8.

In this variant, the LEDs 14 are located adjacent to the rear sidewall of light-guide plate 200, so that the light emitted by the LEDs 14 can enter into the rear segment of light-guide plate 200 and then propagate towards the front segment of the light-guide plate 200 by total internal reflection.

In addition, the front segment of light-guide plate 200 has a front or rear face suitably structured so as to deflect, in a controlled and progressive manner towards the adjacent bearing plate 8, the light rays propagating into the plate.

In particular, in the example illustrated, the light-guide plate 200 is preferably made of polycarbonate (PC), polymethyl-methacrylate (PMMA) or another transparent plastic material.

In addition, the rear face of the front segment of light-guide plate 200 is preferably provided with a myriad of small prisms, lenticular recesses or other light-extracting structures (not visible in the Figures) that are shaped so as to deflect the incident light towards the front face of the same front segment, with an incidence angle such that the light rays can freely come out from the front segment of the light-guide plate 100 and reach the rear face of bearing plate 8.

Moreover, in the illustrated example the light-guide plate 200 is preferably also provided with a series of substantially straight, transversal slots 201 that extend into the body of the plate preferably, but not necessarily, in a pass-through manner, and subdivide the same light-guide plate 200 into a series of adjacent sectors, which are L-bent and are preferably aligned each to a corresponding sector of bearing plate 8, so as to channel the light only towards that sector of bearing plate 8.

Preferably, each sector of light-guide plate 200 moreover receives the light from a limited group of LEDs 14, so as to backlight only the facing sector of the bearing plate 8.

More particularly, the rear segment of light-guide plate 200 is arranged substantially flush and perpendicular to the printed circuit board 15 supporting the LEDs 14, and the LEDs 14 are preferably distributed on the printed circuit board 15 in small groups, each of which is aligned with a respective sector of the light-guide plate 200.

Finally, in a not-shown alternative and embodiment, the automotive lighting apparatus 1 may be completely separate and distinct from the automotive light 101.

In other words, the lighting apparatus 1 is provided with its own rear body, structurally similar to the rear body 102, which is structured so as to be firmly fixed to the vehicle bodywork, and is dimensioned so as to accommodate the opaque mask 2, the bearing plate 5 with the transparent protruding plug or plugs 6, the bearing plate 8 with the opaque protruding plug or plugs 9, and the lighting assembly 12; and with its own front half-shell, structurally similar to the front half-shell 103, which is placed to close the mouth of said rear body spaced above the opaque mask 2, so as to delimit, with the latter, the empty gap 3.

## Claims

1. An automotive lighting apparatus (1) adapted to produce one or more luminous graphic signs and comprising:
a rear body (102) which has a substantially basin-shaped structure and is adapted to be fixed onto the vehicle; a front half-shell (103) which is placed to close the mouth of the rear body (102) and is provided with at least one transparent sector; and backlighting means which are placed inside the rear body (102) and are adapted to backlight the transparent sector of said front half-shell (103);
the automotive lighting apparatus (1) **being characterised in that** the backlighting means comprise: a substantially plate-like, opaque mask (2) that is located spaced beneath the front half-shell (103) so as to form with the latter a gap (3), and is provided with one or more first pass-through openings (4) whose overall shape copies the shape of the outer perimeter edge of the luminous graphic sign or signs to be realized; a first bearing plate (5) with a transparent structure, which is placed close to the opaque mask (2) and supports one or more transparent protruding plugs (6) that overall copy the shape of the luminous graphic sign(s) to be realized, are aligned with the first pass-through opening(s) (4) of the opaque mask (2) and jut cantilevered into said gap (3); a second bearing plate (8) with a transparent structure, which is arranged flush with the rear face of the first bearing plate (5) and supports one or more opaque protruding plugs (9) that overall copy the shape of the hollow spaces present within the luminous graphic sign(s) to be realized, and jut cantilevered from the second bearing plate (8) up to reach said gap (3), while engaging second complementary-shaped pass-through openings (10) made in the first bearing plate (5) and aligned to said first pass-through opening(s) (4); and an electrically-powered lighting assembly (12) which is located behind the second bearing plate (8) and is adapted to direct, towards the rear face of the second bearing plate (8), a light beam that crosses in sequence said bearing plates (5, 8) and then propagates into said one or more transparent protruding plugs (6) by total internal reflection, freely coming out from the front part of the or each transparent protruding plug (6).

2. The automotive lighting apparatus according to Claim 1, wherein said opaque mask (2) is located in front of said first bearing plate (5), and said one or more transparent protruding plugs (6) jut out cantilevered into said gap (3), engaging said one or more first pass-through openings (4) of the opaque mask (2) in pass-through manner.

3. The automotive lighting apparatus according to Claim 1 or 2, wherein the transparent protruding plug or plugs (6) are made in one piece with said first bearing plate (5).

4. The automotive lighting apparatus according to claim 1, 2 or 3, wherein the opaque protruding plug or plugs (9) and said second bearing plate (8) form a monolithic structure.

5. The automotive lighting apparatus according to any one of the preceding Claims, wherein the or each transparent protruding plug (6) is shaped substantially in the form of a rectilinear section-bar with a constant cross-section; and/or wherein the or each opaque protruding plug (9) is shaped substantially in the form of a rectilinear section-bar with a constant cross-section.

6. The automotive lighting apparatus according to any one of Claims 2 to 5, wherein the opaque mask (2) has, along the perimeter edge of each first pass-through opening (4), a projecting collar (7) extending cantilevered towards the front half-shell (103).

7. The automotive lighting apparatus according to Claim 6, wherein the transparent protruding plug or plugs (6) project beyond the top of said protruding collar or collars (7).

8. The automotive lighting apparatus according to Claim 6 or 7, wherein the opaque protruding plug or plugs (9) reach the top of said protruding collar or collars (7).

9. The automotive lighting apparatus according to any one of the preceding Claims, wherein the second bearing plate (8) substantially copies the shape of the first bearing plate (5), and is arranged abutting on the first bearing plate (5) so as to form a sandwich structure.

10. The automotive lighting apparatus according to any one of the preceding Claims, wherein the lighting assembly (12) comprises: at least one deflector body (13) which is located behind the second bearing plate (8) and is provided with a concave surface capable of reflecting the incident light towards the rear face of the second bearing plate (8); and one or more LEDs (14) that are located at a side of said at least one deflector body (13) and are oriented so as to direct the emitted light towards the concave surface of the deflector body (13).

11. The automotive lighting apparatus according to Claim 10, wherein the second bearing plate (8) is divided into a number of adjacent sectors, and the lighting assembly (12) is provided with a number of deflector bodies (13) that are arranged adjacent to one other, each facing a respective sector of said second bearing plate (8).

12. The automotive lighting apparatus according to Claim 10 or 11, wherein the deflector body(s) (13) of the lighting assembly (12) is/are replaced by one or more light-guide body(s) (100, 200) capable of channelling the light from the LED(s) (14) towards the rear face of said second bearing plate (8).

13. The automotive lighting apparatus according to any one of the preceding Claims, wherein said first bearing plate (5) and said one or more transparent protruding plugs (6) are made of transparent plastic material.

14. The automotive lighting apparatus according to any one of the preceding Claims, wherein said second bearing plate (9) is made of transparent plastic material, and said one or more opaque protruding plugs (9) are made of opaque plastic material and/or are overmoulded on said second bearing plate (9).

15. The automotive lighting apparatus according to any one of the preceding Claims, wherein said opaque mask (2) and said first bearing plate (5) form a single body.

16. An automotive light (101) comprising: a rear body (102) which is substantially basin shaped and is structured so as to be fixed onto the bodywork of the vehicle; a front half-shell (103) which is placed to close the mouth of the rear body (102) and is provided with one or more transparent or semi-transparent sectors; and one or more electrically-powered lighting assemblies (104), each of which emits light on command and is located inside the rear body (102), beneath a corresponding transparent or semi-transparent sector of the front half-shell (103), so as to be able to backlight the same transparent or semi-transparent sector of the half-shell;
the automotive light (101) **being characterised by the fact** that it also includes a motor vehicle lighting apparatus (1) realized according to any one of Claims 1 to 15.

17. The automotive light according to Claim 16, wherein said automotive light (101) is a taillight for motor vehicles.

18. The automotive light according to Claim 16 or 17, wherein said automotive light (101) is oblong in shape, and said automotive lighting apparatus (1) is located in the central segment of the same automotive light (101).

## Patentansprüche

1. Automobilbeleuchtungsvorrichtung (1), die angepasst ist, um ein oder mehrere leuchtende grafische Zeichen zu erzeugen, und umfassend:
einen hinteren Körper (102), der eine im Wesentlichen beckenförmige Struktur aufweist und angepasst ist, um an dem Fahrzeug befestigt zu werden; eine vordere Halbschale (103), die platziert ist, um die Öffnung des hinteren Körpers (102) zu verschließen und mit mindestens einem transparenten Bereich versehen ist; und Hintergrundbeleuchtungsmittel, die in einem Inneren des hinteren Körpers (102) platziert sind und angepasst sind, um den transparenten Bereich der vorderen Halbschale (103) von hinten zu beleuchten;
wobei die Fahrzeugbeleuchtungsvorrichtung (1) **dadurch gekennzeichnet ist, dass** die Hintergrundbeleuchtungsmittel umfassen: eine im Wesentlichen plattenartige, undurchsichtige Maske (2), die mit Abstand unterhalb der vorderen Halbschale (103) gelegen ist, um mit der letztgenannten einen Spalt (3) auszubilden, und die mit einer oder mehreren ersten Durchgangsöffnungen (4) versehen ist, deren Gesamtform die Form des äußeren Umfangrands des oder der herzustellenden leuchtenden grafischen Zeichen nachbildet; eine erste Trägerplatte (5) mit einer transparenten Struktur, die nahe der undurchsichtigen Maske (2) platziert ist und einen oder mehrere transparente hervorstehende Stopfen (6) trägt, die insgesamt die Form des/der herzustellenden leuchtenden grafischen Zeichens/Zeichen nachbilden, auf die erste/n Durchgangsöffnung(en) (4) der undurchsichtigen Maske (2) ausgerichtet sind und freitragend in den Spalt (3) hineinragen; eine zweite Trägerplatte (8) mit einer transparenten Struktur, die bündig mit der hinteren Fläche der ersten Trägerplatte (5) angeordnet ist und einen oder mehrere undurchsichtige hervorstehende Stopfen (9) trägt, die insgesamt die Form der Hohlräume nachbilden, die innerhalb des/der herzustellenden leuchtenden grafischen Zeichen(s) vorhanden sind, und freitragend von der zweiten Trägerplatte (8) nach oben herausragen, um den Spalt (3) zu erreichen, während sie in zweite komplementär geformte Durchgangsöffnungen (10) eingreifen, die in der ersten Trägerplatte (5) gefertigt und auf die erste(n) Durchgangsöffnung(en) (4) ausgerichtet sind; und eine elektrisch betriebene Beleuchtungsbaugruppe (12), die hinter der zweiten Lagerplatte (8) gelegen ist und angepasst ist, um einen Lichtstrahl, der die Lagerplatten (5, 8) nacheinander durchquert und sich dann durch Totalreflexion in den einen oder die mehreren transparenten hervorstehenden Stopfen (6) hinein ausbreitet, frei aus dem vorderen Teil des oder jedes transparenten hervorstehenden Stopfens (6) austritt, zu der hinteren Fläche der zweiten Lagerplatte (8) hin zu richten.

2. Fahrzeugbeleuchtungsvorrichtung nach Anspruch 1, wobei die undurchsichtige Maske (2) vor der ersten Lagerplatte (5) gelegen ist und der eine oder die mehreren transparenten hervorstehenden Stopfen (6) freitragend in den Spalt (3) hineinragen, in die eine oder die mehreren ersten Durchgangsöffnungen (4) der undurchsichtigen Maske (2) in einer Durchgangsweise eingreifen.

3. Fahrzeugbeleuchtungsvorrichtung nach Anspruch 1 oder 2, wobei der oder die transparenten hervorstehenden Stopfen (6) aus einem Stück mit der ersten Lagerplatte (5) gefertigt sind.

4. Fahrzeugbeleuchtungsvorrichtung nach Anspruch 1, 2 oder 3, wobei der oder die undurchsichtigen hervorstehenden Stopfen (9) und die zweite Lagerplatte (8) eine monolithische Struktur ausbilden.

5. Fahrzeugbeleuchtungsvorrichtung nach einem der vorstehenden Ansprüche, wobei der oder jeder transparente hervorstehende Stopfen (6) im Wesentlichen in der Form eines geradlinigen Profilstabs mit einem konstanten Querschnitt geformt ist, und/oder wobei der oder jeder undurchsichtige hervorstehende Stopfen (9) im Wesentlichen in der Form eines geradlinigen Profilstabs mit einem konstanten Querschnitt geformt ist.

6. Fahrzeugbeleuchtungsvorrichtung nach einem der Ansprüche 2 bis 5, wobei die undurchsichtige Maske (2) entlang dem Umfangsrand jeder ersten Durchgangsöffnung (4) einen vorspringenden Kragen (7) aufweist, der sich zu der vorderen Halbschale (103) hin freitragend erstreckt.

7. Fahrzeugbeleuchtungsvorrichtung nach Anspruch 6, wobei der oder die transparenten hervorstehenden Stopfen (6) über die Oberseite des oder der hervorstehenden Kragen (7) vorspringen.

8. Fahrzeugbeleuchtungsvorrichtung nach Anspruch 6 oder 7, wobei der oder die undurchsichtigen hervorstehenden Stopfen (9) bis zu der Oberseite des hervorstehenden Kragens oder der hervorstehenden Kragen (7) reichen.

9. Fahrzeugbeleuchtungsvorrichtung nach einem der vorstehenden Ansprüche, wobei die zweite Lagerplatte (8) im Wesentlichen die Form der ersten Lagerplatte (5) nachbildet und an die erste Lagerplatte (5) anstoßend angeordnet ist, um eine Sandwichstruktur auszubilden.

10. Fahrzeugbeleuchtungsvorrichtung nach einem der vorstehenden Ansprüche, wobei die Beleuchtungsbaugruppe (12) umfasst: mindestens einen Deflektorkörper (13), der hinter der zweiten Lagerplatte (8) gelegen ist und mit einer konkaven Oberfläche versehen ist, die in der Lage ist, das einfallende Licht zu der hinteren Fläche der zweiten Lagerplatte (8) hin zu reflektieren; und eine oder mehrere LEDs (14), die an einer Seite des mindestens einen Deflektorkörpers (13) gelegen sind und orientiert sind, um das emittierte Licht zu der konkaven Oberfläche des Deflektorkörpers (13) hin zu richten.

11. Fahrzeugbeleuchtungsvorrichtung nach Anspruch 10, wobei die zweite Lagerplatte (8) in eine Anzahl von angrenzenden Bereichen unterteilt ist und die Beleuchtungsbaugruppe (12) mit einer Anzahl von Deflektorkörpern (13) versehen ist, die angrenzend aneinander angeordnet sind, wobei sie jeweils einem entsprechenden Bereich der zweiten Lagerplatte (8) zugewandt sind.

12. Fahrzeugbeleuchtungsvorrichtung nach Anspruch 10 oder 11, wobei der/die Deflektorkörper (13) der Beleuchtungsbaugruppe (12) durch einen oder mehrere Lichtleitkörper (100, 200) ersetzt ist/sind, die in der Lage sind, das Licht von der/den LED(s) (14) zu der hinteren Fläche der zweiten Lagerplatte (8) hin zu lenken.

13. Fahrzeugbeleuchtungsvorrichtung nach einem der vorstehenden Ansprüche, wobei die erste Lagerplatte (5) und der eine oder die mehreren transparenten hervorstehenden Stopfen (6) aus transparentem Kunststoffmaterial gefertigt sind.

14. Fahrzeugbeleuchtungsvorrichtung nach einem der vorstehenden Ansprüche, wobei die zweite Lagerplatte (9) aus transparentem Kunststoffmaterial gefertigt ist und der eine oder die mehreren undurchsichtigen hervorstehenden Stopfen (9) aus undurchsichtigem Kunststoffmaterial gefertigt sind und/oder auf die zweite Lagerplatte (9) umspritzt sind.

15. Fahrzeugbeleuchtungsvorrichtung nach einem der vorstehenden Ansprüche, wobei die undurchsichtige Maske (2) und die erste Lagerplatte (5) einen einzigen Körper ausbilden.

16. Fahrzeuglicht (101) umfassend: einen hinteren Körper (102), der im Wesentlichen beckenförmig ist und strukturiert ist, um an der Karosserie des Fahrzeugs befestigt zu werden; eine vordere Halbschale (103), die platziert ist, um die Öffnung des hinteren Körpers (102) zu verschließen und mit einem oder mehreren transparenten oder halbtransparenten Bereichen versehen ist; und eine oder mehrere elektrisch betriebene Beleuchtungsbaugruppen (104), die jeweils auf Befehl Licht emittieren und in dem hinteren Körper (102) unter einem entsprechenden transparenten oder halbtransparenten Bereich der vorderen Halbschale (103) gelegen sind, um denselben transparenten oder halbtransparenten Bereich der Halbschale von hinten beleuchten zu können;
wobei das Fahrzeuglicht (101) durch die Tatsache gekennzeichnet ist, dass es ebenso eine Kraftfahrzeugbeleuchtungsvorrichtung (1) einschließt, die nach einem der Ansprüche 1 bis 15 hergestellt ist.

17. Fahrzeuglicht nach Anspruch 16, wobei das Fahrzeuglicht (101) ein Rücklicht für Kraftfahrzeuge ist.

18. Fahrzeuglicht nach Anspruch 16 oder 17, wobei das Fahrzeuglicht (101) eine längliche Form hat und die Fahrzeugbeleuchtungsvorrichtung (1) in dem mittleren Bereich desselben Fahrzeuglichts (101) gelegen ist.

## Revendications

1. Appareil d'éclairage automobile (1) conçu pour produire un ou plusieurs signes graphiques lumineux et comprenant : un corps arrière (102) ayant une structure sensiblement en forme de cuvette et conçu pour être fixé sur le véhicule ; une demi-coque avant (103) qui est placée pour fermer l'ouverture du corps arrière (102) et qui est pourvue d'au moins un secteur transparent ; et des moyens de rétro-éclairage placés à l'intérieur du corps arrière (102) et conçus pour rétro-éclairer le secteur transparent de ladite demi-coque avant (103) ;
l'appareil d'éclairage automobile (1) **étant caractérisé en ce que** les moyens de rétro-éclairage comprennent : un masque opaque (2) sensiblement en forme de plaque qui est situé à distance sous la demi-coque avant (103) de manière à former avec cette dernière un espace (3), et qui est pourvu d'un ou de plusieurs premiers orifices de passage (4) dont la forme générale reproduit la forme du bord périmétrique extérieur du ou des signes graphiques lumineux à réaliser ; une première plaque d'appui (5) à structure transparente, placée à proximité du masque opaque (2) et supportant un ou plusieurs bouchons transparents en saillie (6) qui épousent globalement la forme du ou des signes graphiques lumineux à réaliser, sont alignés sur le ou les premiers orifices de passage (4) du masque opaque (2) et s'avancent en porte-à-faux dans ledit espace (3) ; une seconde plaque d'appui (8) à structure transparente, agencée au ras de la face arrière de la première plaque d'appui (5) et supportant un ou plusieurs bouchons opaques en saillie (9) qui épousent globalement la forme des espaces creux présents à l'intérieur du (des) signe(s) graphique(s) lumineux à réaliser, et font saillie en porte-à-faux à partir de la seconde plaque d'appui (8) jusqu'à atteindre ledit espace (3), tout en mettant en prise les seconds orifices de passage de forme complémentaire (10) effectués dans la première plaque d'appui (5) et alignés sur ledit ou lesdits premier(s) orifice(s) de passage (4) ; et un ensemble d'éclairage (12) à alimentation électrique, situé derrière la seconde plaque d'appui (8) et conçu pour diriger, vers la face arrière de la seconde plaque d'appui (8), un faisceau lumineux qui traverse successivement lesdites plaques d'appui (5, 8) et se propage ensuite dans lesdits un ou plusieurs bouchons transparents en saillie (6) par réflexion interne totale, en sortant librement de la partie avant du ou de chaque bouchon transparent en saillie (6).

2. Appareil d'éclairage automobile selon la revendication 1, dans lequel ledit masque opaque (2) est situé devant ladite première plaque d'appui (5), et lesdits un ou plusieurs bouchons transparents en saillie (6) font saillie en porte-à-faux dans ledit espace (3), mettant en prise lesdits un ou plusieurs premiers orifices de passage (4) du masque opaque (2) d'une manière traversante.

3. Appareil d'éclairage automobile selon la revendication 1 ou 2, dans lequel le ou les bouchons transparents en saillie (6) sont fabriqués en une seule pièce avec ladite première plaque d'appui (5).

4. Appareil d'éclairage automobile selon la revendication 1,2 ou 3, dans lequel le ou les bouchons opaques en saillie (9) et ladite seconde plaque d'appui (8) forment une structure monolithique.

5. Appareil d'éclairage automobile selon l'une quelconque des revendications précédentes, dans lequel le ou chaque bouchon transparent en saillie (6) est formé essentiellement sous la forme d'une barre de section rectiligne à section transversale constante ; et/ou dans lequel le ou chaque bouchon opaque en saillie (9) se présente essentiellement sous la forme d'une barre de section rectiligne à section transversale constante.

6. Appareil d'éclairage automobile selon l'une quelconque des revendications 2 à 5, dans lequel le masque opaque (2) comporte, le long du bord périmétrique de chaque premier orifice de passage (4), une collerette en saillie (7) s'étendant en porte-à-faux vers la demi-coque avant (103).

7. Appareil d'éclairage automobile selon la revendication 6, dans lequel le ou les bouchons transparents en saillie (6) dépassent le sommet de la ou des collerettes en saillie (7).

8. Appareil d'éclairage automobile selon la revendication 6 ou 7, dans lequel le ou les bouchons opaques en saillie (9) atteignent le sommet du ou des collerettes en saillie (7).

9. Appareil d'éclairage automobile selon l'une quelconque des revendications précédentes, dans lequel la seconde plaque d'appui (8) reproduit sensiblement la forme de la première plaque d'appui (5), et est agencée en butée sur la première plaque d'appui (5) de manière à former une structure en sandwich.

10. Appareil d'éclairage automobile selon l'une quelconque des revendications précédentes, dans lequel l'ensemble d'éclairage (12) comprend : au moins un corps déflecteur (13) qui est situé derrière la seconde plaque d'appui (8) et qui est doté d'une surface concave capable de réfléchir la lumière incidente vers la face arrière de la seconde plaque d'appui (8) ; et une ou plusieurs DEL (14) situées sur un côté dudit au moins un corps déflecteur (13) et orientées de manière à diriger la lumière émise vers la surface concave du corps déflecteur (13).

11. Appareil d'éclairage automobile selon la revendication 10, dans lequel la seconde plaque d'appui (8) est divisée en un certain nombre de secteurs adjacents, et l'ensemble d'éclairage (12) est pourvu d'un certain nombre de corps déflecteurs (13) qui sont agencés de manière adjacente l'un par rapport à l'autre, chacun faisant face à un secteur respectif de ladite seconde plaque d'appui (8).

12. Appareil d'éclairage automobile selon la revendication 10 ou 11, dans lequel le(s) corps déflecteur(s) (13) de l'ensemble d'éclairage (12) est/sont remplacé(s) par un ou plusieurs corps guide-lumière (100, 200) capable(s) de canaliser la lumière provenant de la/des LED (14) vers la face arrière de ladite seconde plaque d'appui (8).

13. Appareil d'éclairage automobile selon l'une quelconque des revendications précédentes, dans lequel ladite première plaque d'appui (5) et lesdits un ou plusieurs bouchons transparents en saillie (6) sont en matière plastique transparente.

14. Appareil d'éclairage automobile selon l'une quelconque des revendications précédentes, dans lequel ladite seconde plaque d'appui (9) est en matière plastique transparente, et lesdits un ou plusieurs bouchons opaques en saillie (9) sont en matière plastique opaque et/ou sont surmoulés sur ladite seconde plaque d'appui (9).

15. Appareil d'éclairage automobile selon l'une quelconque des revendications précédentes, dans lequel ledit masque opaque (2) et ladite première plaque d'appui (5) forment un seul corps.

16. Éclairage automobile (101) comprenant : un corps arrière (102) qui a sensiblement la forme d'un bassin et qui est structuré de manière à être fixé sur la carrosserie du véhicule ; une demi-coque avant (103) qui est placée pour fermer l'ouverture du corps arrière (102) et qui est pourvue d'un ou de plusieurs secteurs transparents ou semi-transparents ; et un ou plusieurs ensembles d'éclairage (104) à alimentation électrique, émettant chacun de la lumière sur commande et situés à l'intérieur du corps arrière (102), sous un secteur transparent ou semi-transparent correspondant de la demi-coque avant (103), de manière à pouvoir rétro-éclairer le même secteur transparent ou semi-transparent de la demi-coque ;
l'éclairage de véhicule (101) **étant caractérisé en ce qu'**il comporte également un appareil d'éclairage de véhicule automobile (1) réalisé selon l'une quelconque des revendications 1 à 15.

17. Éclairage automobile selon la revendication 16, dans lequel ledit éclairage automobile (101) est un feu arrière pour véhicules à moteur.

18. Éclairage automobile selon la revendication 16 ou 17, dans lequel ledit éclairage automobile (101) est de forme oblongue, et ledit appareil d'éclairage automobile (1) est situé dans le segment central du même éclairage automobile (101).
